# EUROPEAN PATENT APPLICATION

(11) **EP 0 875 139 A1**
(43) Date of publication of application: **04.11.1998**
(21) Application number: 98200640.5
(22) Date of filing: 02.03.1998
(51) Int. Cl.: A01J 25/11

(54) **Apparatus for delivering curd from a cheese vat into a cheese presing vat**

(30) Priority: 08.04.1997 FI 971460
(71) Applicant: Tetra Pak Tebel OY, 04400 Järvenpää (FI)
(72) Inventor: Granberg, Carl-Gustav, 04170 Paippinen (FI)
(74) Representative: Heinänen, Pekka Antero

(57) **Abstract**

The invention relates to an apparatus for delivering curd from a cheese vat into a cheese pressing vat (4), said apparatus comprising a feed piping (2) having a curd distributor device (3) connected thereto that serves to deliver the curd into said cheese pressing vat (4), and said distributor device (3) further being equipped with guide walls (8) for distributing the curd evenly from the feed piping (2) into the cheese pressing vat (4). According to the invention, the apparatus is implemented so that said distributor device includes a space (9) such as a container or vat for collecting the whey separated from the curd and that said apparatus is equipped with a pump (10) having its suction-side pipe (11) connected to said space (9) and being adapted to pump the collected whey via the discharge pipe (12) of said pump (10) to a desired point.

## Description

The present invention relates to an apparatus for delivering curd from a cheese vat into a cheese pressing vat, said apparatus comprising a feed piping having a curd distributor device connected thereto that serves to distribute the curd into the cheese pressing vat and is equipped with curd flow guide walls for distributing the curd evenly from the feed piping into the cheese pressing vat.

In principle, cheeses can be divided by their hole types into two groups: cheeses with round eyes and cheeses with an open granular texture. A typical variety of round-eyed cheeses is the Emmenthal cheese, for instance, and a typical cheese of open granular texture is marketed in Finland under the trade name "Oltermanni". According to its characterizing term, a round-eyed cheese has the eyes formed into round holes which are distinctly separate from each other and often have a large diameter. By contrast, cheeses of an open, granular texture have the holes formed into small voids of undefined shape. The difference between the characteristic hole types due to the coexistence of a major portion of the whey in the curd compression step of round-eyed cheeses, while the curd used in making granular-texture cheeses is pressed with a major portion of the whey removed prior to the cheese pressing step.

As known, cheesemaking takes place by first heating rennetted milk in a cheese vat, whereby the milk coagulates into curd (mass of curd) and whey. From the cheese vat, the curd and the whey are passed via a piping to, e.g., a cheese pressing vat. For making a granular-texture cheese, a major portion of the whey is removed in some manner from the curd prior to its pressing.

A problem of the prior-art technique is that therein is needed a separate assembly of equipment for making either of these major cheese varieties. It is an object of the present invention to provide an single apparatus suitable with minor changes for making both granular-texture and round-eyed cheese. The apparatus according to the invention is characterized by in that the distributor device includes a space such as a container or vat for collecting the whey separated from the curd and that said apparatus is equipped with a pump having its suction-side pipe connected to said space and being adapted to pump the collected whey via the discharge pipe of said pump to a desired point.

A preferred embodiment of the apparatus according to the invention is characterized in that at least a portion of said curd flow guide wall is adapted removable so that said guide wall can be formed by a solid plate, or alternatively, by a perforated sieve plate, and that said removable portion of said curd flow guide wall is mounted essentially above the liquid level in said whey container.

Another preferred embodiment of the apparatus according to the invention is characterized in that at least a portion of said feed piping is formed by a dual-wall pipe so that the inner pipe acts as the feed pipe and the surrounding outer pipe acts as the whey discharge line having the discharge pipe of the pump connected thereto either directly or indirectly.

A still another preferred embodiment of the apparatus according to the invention is characterized in that said outer pipe has an essentially rectangular, advantageously an essentially square cross section, and that said inner pipe has an essentially circular cross section.

The goal of the invention is achieved by virtue of delivering the contents of a cheese vat, that is, the stirred mixture of curd and whey, via a piping into a distributor device. In the production of a cheese variety with an open granular texture, which requires the removal of the whey prior to the pressing of the curd, a provision is made in the distributor device for mounting above the whey separation space a perforated sieve plate, whereby the whey can fall down into the whey collection space to be removed therefrom by means of a pump. By contrast, when a round-eyed variety of cheese is to be produced, the removable sieve plate is replaced by a solid plate, whereby also the whey is delivered into the cheese pressing vat.

Thus, the principal benefit of the invention is realized in the provision permitting the same combination of the distributor device and the cheese pressing vat to be used with extremely simple change operations for producing cheese varieties having either a granular texture or round eyes.

In the following, the invention will be described in greater detail with reference to the appended drawings, in which
Figure 1 shows a schematic diagram of a section of a cheesemaking line;
Figure 2 shows a side view of a feed/distributor device suited for delivering curd, possibly containing whey as required, into a cheese pressing vat;
Figure 3 shows the same device as Fig. 2, but in a top view;
Figure 4 shows a feed/distributor pipe according to the invention; and
Figure 5 shows a sectional view of the pipe along the line A-A.

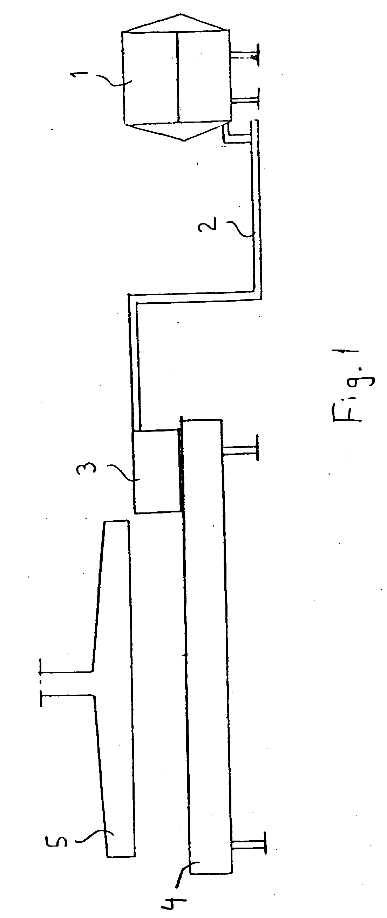

Referring to Fig. 1, therein is shown a rather simplified section of a cheesemaking line. The scaling of the different elements may deviate from those of practical equipment. The only diagrammatic function of Fig. 1 is to elucidate the section of a cheesemaking line to which the present invention is related. Reference numeral 1 designates a cheese vat in which the rennetted milk is coagulated by heating into curd and whey. The mixture of these components is pumped along a piping 2 into a feed/distributor device 3, and therefrom further into a pressing vat 4. The pressing of the curd (with or without whey) is implemented with the help of a pressing means 5 arranged by conventional methods to be vertically actuated. The width and length of the pressing underside surface of the pressing means 5 are made essentially equal to the effective internal width and length of the pressing vat.

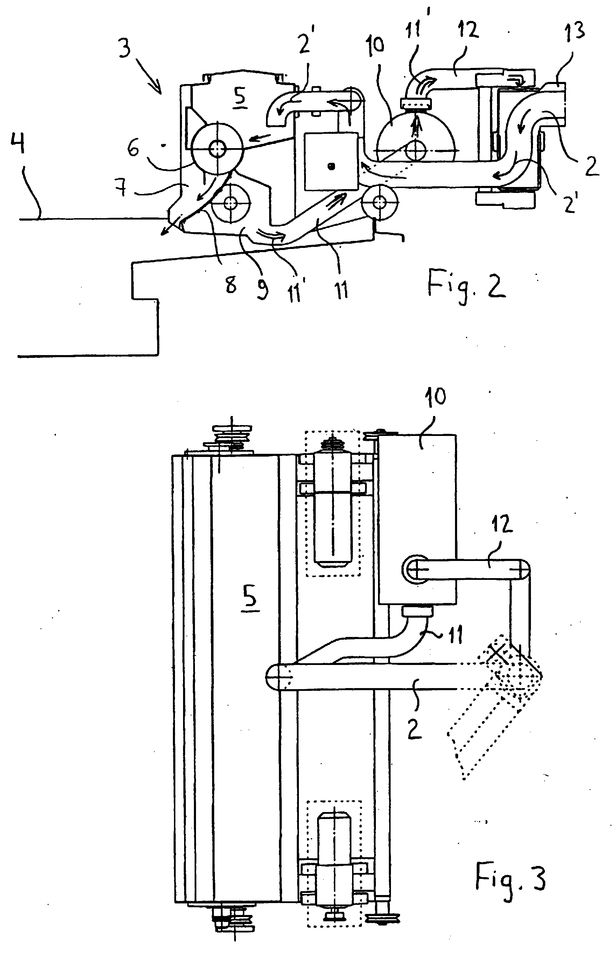

The present invention concerns particularly a cheese distributor device and a feed pipe connected thereto. These elements are illustrated in greater detail in Figs. 2-5. In Fig. 2 is shown the side view of an embodiment of the curd distributor device according to the invention. The curd and the whey are delivered along a feed piping 2 as indicated by arrows 2' into the distribution space 5, and therefrom over a distributor roll 6 further via a hopper 7 into the cheese pressing vat 4. At least a portion of the guide wall 8 of the hopper 7 is made removable, thus permitting the removable portion of guide wall to be formed by a solid plate or a perforated sieve plate. If the entire guide wall 8 is formed by a solid plate, both the curd and the whey will be delivered into the cheese pressing vat, which is suitable for making a round-eyed cheese. By contrast, if guide wall 8 is formed by a perforated sieve plate, the whey will be drained via the sieve wall into the underlying whey collection space 9. Then, only the solid mass of curd will be delivered into the cheese pressing vat 4 as required in the making of a cheese variety having an open granular texture.

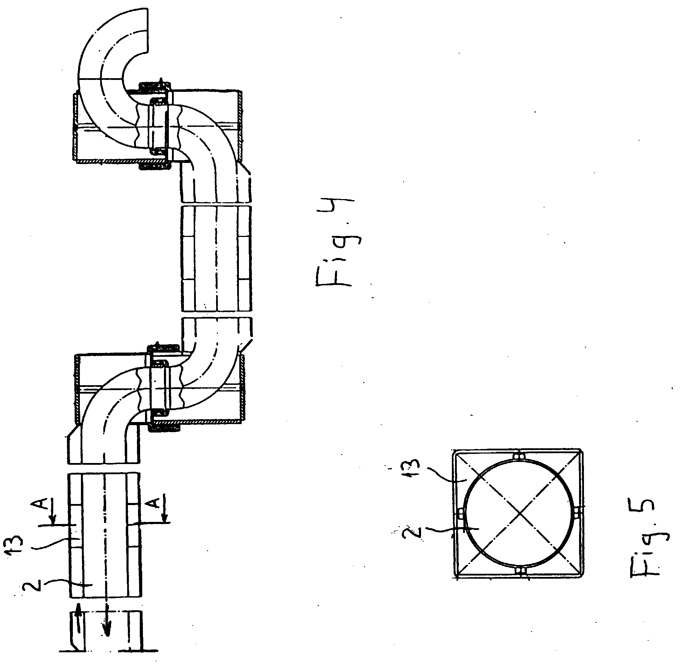

From the whey collection space 9, the whey can be removed as indicated by double arrows 11' by means of a pump 10 having its suction-side pipe 11 connected to said whey collection space 9. The discharge pipe 12 of the pump 10 moves the whey further toward a whey discharge channel 13, whose detailed structure is illustrated in Figs. 4 and 5. The whey discharge channel 13 is adapted about the feed pipe 2, thus permitting a compact construction. Simply, at least a portion of the feed piping is formed by a coaxial dual-wall pipe in which the inner pipe 2 acts as the feed pipe and the surrounding outer pipe 13 acts as the whey discharge channel having the discharge pipe 12 of the pump connected thereto either directly or indirectly. As shown in Fig. 5, the outer pipe 13 can have an essentially rectangular, advantageously an essentially square cross section, while the inner pipe advantageously has an essentially circular cross section. Via the discharge pipe 13, the whey can be returned to the cheese vat 1 or other suitable point for further processing.

To a person versed in the art it is obvious that the invention is not limited by the exemplifying embodiments described above, but rather, may be varied within the scope and spirit of the appended claims. For instance, the feed/distributor device 3 can be made longitudinally traversing over the cheese pressing vat in order to achieve smooth application of the curd. Alternatively, the feed/distributor device may be stationary and the cheese pressing vat made longitudinally movable. According to the convention of the art, the term "curd" in the claims covers both a drained mass of curd and a stirred mixture of curd and whey, as well.

## Claims

1. An apparatus for delivering curd from a cheese vat (1) into a cheese pressing vat (4), said apparatus comprising a feed piping (2) having a curd distributor device (3) connected thereto that serves to deliver the curd into said cheese pressing vat (4), and said distributor device (3) further being equipped with guide walls (8) for distributing the curd evenly from the feed piping (2) into the cheese pressing vat (4), **characterized** in that said distributor device includes a space (9) such as a container or vat for collecting the whey separated from the curd and that said apparatus is equipped with a pump (10) having its suction-side pipe (11) connected to said space (9) and being adapted to pump the collected whey via the discharge pipe (12) of said pump (10) to a desired point.

2. An apparatus as defined in claim 1, **characterized** in that at least a portion of said curd flow guide wall (8) is adapted removable so that said guide wall can be formed by a solid plate, or alternatively, by a perforated sieve plate, and that said removable portion of said guide wall (8) is mounted essentially above the liquid level in said whey container.

3. An apparatus as defined in claim 1 or 2, **characterized** in that at least a portion of said feed piping (2) is formed by a coaxial dual-wall pipe so that the inner pipe (2) acts as the feed pipe and the surrounding outer pipe (13) acts as the whey discharge channel having the discharge pipe (12) of said pump (10) connected thereto either directly or indirectly.

4. An apparatus as defined in claim 3, **characterized** in that said outer pipe (13) has an essentially rectangular, advantageously an essentially square cross section, and that said inner pipe (2) has an essentially circular cross section.
